# EUROPÄISCHE PATENTSCHRIFT

(11) **EP 3 064 823 B1**
(45) Veröffentlichungstag und Bekanntmachung des Hinweises auf die Patenterteilung: **27.09.2017**
(21) Anmeldenummer: 15157570.1
(22) Anmeldetag: 04.03.2015
(51) Int. Cl.: F16M 11/04, F41G 11/00

(54) **SCHNELLSPANNVORRICHTUNG ZUR SELBSTSCHLIESSENDEN AUFNAHME EINES GEGEGENSTÜCKS**
QUICK-ACTING CLAMPING DEVICE FOR SELF-CLOSING HOLDING OF A COUNTERPIECE
DISPOSITIF DE SERRAGE RAPIDE POUR LE LOGEMENT À FERMETURE AUTOMATIQUE D'UN PENDANT

(43) Veröffentlichungstag der Anmeldung: 07.09.2016
(73) Patentinhaber: vhf elektronik GmbH, 90513 Zirndorf (DE)
(72) Erfinder: Pfab, Wolfgang, 90402 Nürnberg (DE)
(74) Vertreter: Götz, Georg Alois

(56) Entgegenhaltungen:
- EP-A2- 2 196 720
- WO-A1-2015/024471
- CN-U- 202 469 393
- DE-A1-102011 013 552
- GB-A- 2 515 549
- US-A1- 2013 156 495
- US-B1- 7 739 824

## Beschreibung

Die Erfindung betrifft eine Schnellspannvorrichtung zur selbstschließenden Aufnahme eines Gegenstücks, insbesondere einer Waffenmontageschiene oder eines optischen Geräts.

Schnellspannvorrichtungen sind in vielerlei Ausführungen aus dem Stand der Technik bekannt und dienen im Allgemeinen der schnellen, werkzeuglosen Montage eines Werkstücks oder Zubehörteils bzw. eines Gegenstücks durch Einklemmen und/oder Einspannen. Zumeist verwenden solche Schnellspannvorrichtungen zwei beabstandete Klemmmittel sowie einen außerzentrisch gelagerten Hebel, einen Exzenter, der der Umsetzung einer Drehbewegung des Hebels in eine Längsbewegung dient. Der Exzenter liegt an einem der Klemmmittel an, wodurch sich dieses mittels Drehung des Hebels in Richtung des anderen Klemmmittels verschieben lässt. Durch Verringerung des Abstands zwischen den Klemmmitteln wird das Gegenstück eingeklemmt und/oder eingespannt. Die Spannung führt zu einer Erhöhung der Reibung zwischen Klemmmittel und Exzenter und verhindert so eine Rückdrehung des Exzenters aus der geschlossenen bzw. gespannten Stellung der Schnellspannvorrichtung.

Auch im Bereich der der Schusswaffen- oder Fototechnik kommen solche Schnellspannvorrichtungen häufig zum Einsatz, siehe zum Beispiel DE102011013552, beispielsweise zur Montage oder zum Wechsel verschiedener Zubehörteile oder auch zur Befestigung an Stativen. So sind aus der Schusswaffentechnik verschiedene WaffenMontageschienen bekannt, die zumeist als Schwalbenschwanz- oder Prismen-Schienen mit vorgegebenen Abmessungen und Geometrien ausgeführt sind. Zum Beispiel handelt es sich bei der NATO-Zubehörschiene (NAR), ebenso wie bei der älteren Picatinny-Schiene um eine genormte Waffenmontageschiene. Die Abmessungen und die Geometrie der NATO-Zubehörschiene (NAR) sind entsprechend den Vorgaben STANAG-Nummer 4694 des NATO-Standardisierungsabkommens genormt. Zubehörteile, wie Zielfernrohre oder Nachtsichtgeräte können mittels einer Schnellspannvorrichtung an diese Montageschienen geklemmt und/oder gespannt werden.

Aus der US 2012 014 717 A1 ist eine Montagehalterung zur schnellen und sicheren Anbringung von einem oder mehreren Zubehörteilen an einer Schusswaffe bekannt. Die Halterung lässt sich über verschiedene Montagemöglichkeiten, beispielsweise eine Picatinny-, oder eine Weaver-Schiene an der Schusswaffe fixieren. Hierzu wird die Schiene innerhalb zweier Längsträger positioniert und anschließend durch manuelles Drehen eines Fixierungshebels eingespannt. Eine Übertragung der Spannung von dem Fixierungshebel auf einen gegenüberliegend angeordneten Längsträger wird mittels eines Querbalkens ermöglicht.

Aus der US 6,773,172 B1 ist eine Klammer zur sicheren Befestigung von fotografischem Zubehör an beispielsweise einem Dreibeinstativ bekannt. Diese Klammer umfasst einen Grundkörper mit zwei Seitenwänden, von denen eine verstellbar ausgebildet ist. Der Abstand der Seitenwände lässt sich mittels eines exzentrisch gelagerten Hebels verstellen. Bei Auslenkung des Hebels übt der Exzenter eine nach innen gerichtete Kraft aus, die die verstellbare Seitenwand zur gegenüberliegenden Seitenwand hin bewegt. Zwei Spiralfedern wirken dieser Kraft entgegen, sodass sich die Klammer öffnet, sobald der Hebel geöffnet wird.

In der DE 10 2008 061 980 B4 wird eine ähnliche Schnellspannvorrichtung vorgeschlagen. Zum Einspannen einer Halterung weist eine Kulissenführung einen festen Anschlag und ein verschiebbares Druckstück auf, das sich mittels eines exzentrischen Spannhebels in Richtung des Anschlags bewegen lässt. Ein federbeaufschlagter Schaltstift ragt in einer Offenstellung der Schnellspannvorrichtung aus der Kulissenführung heraus und bildet einen Anschlag für das Druckstück. Wird die Halterung in die geöffnete Kulissenführung eingedrückt, so wird der Schaltstift von einer oberen in eine untere Stellung gebracht und gibt das Druckstück frei. Der Exzenter wirkt mit einer Rückholfeder zusammen, die diesen aus der Offenstellung in eine Führungsstellung dreht. Mittels des Spannhebels lässt sich der Exzenter anschließend manuell aus der Führungsstellung in eine Klemmstellung zum Arretieren der Halterung drehen.

Aufgabe der vorliegenden Erfindung ist es Schnellspannvorrichtungen der eingangs beschriebenen Art hinsichtlich ihres Anwendungsbereichs, ihrer Führungsgenauigkeit und ihrer Handhabung zu verbessern.

Zur Lösung der Aufgabe wird auf die im Anspruch 1 angegebene Schnellspannvorrichtung verwiesen. Vorteilhafte, optionale Ausgestaltungen sind in den abhängigen Ansprüchen angegeben.

Die erfindungsgemäße Schnellspannvorrichtung eignet sich zur selbstschließenden Aufnahme eines Gegenstücks, insbesondere einer Waffenmontageschiene oder eines optischen Geräts. Unter selbstschließender Aufnahme ist das Einspannen und/oder Einklemmen eines aufzunehmenden Gegenstücks, z.B. einer Montageschiene zu verstehen, wobei die Schnellspannvorrichtung selbstständig und/oder automatisch bei Einlegen des Gegenstücks schließt. Eine zusätzliche manuelle Verriegelung ist nicht erforderlich. Die Schnellspannvorrichtung umfasst eine Bodenplatte mit einer ersten und einer zweiten gegenüberliegend angeordneten Kante. Entlang der ersten Kante erstreckt sich eine Klemmschiene, die beispielsweise einstückig mit der Bodenplatte gefertigt sein kann. Entlang der zweiten Kante der Bodenplatte erstreckt sich eine Klemmbacke, die mit einer ersten Federung, z. B. einer oder mehrerer Federn oder anderer elastische rückstellender Bauteile, elastisch verschiebbar gelagert ist. Die Klemmbacke ist relativ zur gegenüberliegenden Klemmschiene verschiebbar, wodurch sich der Abstand zwischen Klemmbacke und Klemmschiene vergrößern oder verkleinern lässt. Klemmschiene und Klemmbacke können eine unterschiedliche oder eine zumindest in etwa gleich geformte Querschnittsfläche aufweisen und sind vorzugsweise mit Nuten zur Aufnahme bzw. zum Einspannen und/oder Einklemmen einer Prismen- und/oder Schwalbenschwanzschiene ausgebildet. Die Klemmschiene und/oder die Klemmbacke können der Länge ihrer jeweils zugeordneten Kante der Bodenplatte entsprechen oder kürzer ausgebildet sein.

Die Schnellspannvorrichtung umfasst weiterhin einen Stift, der sich von der ersten Kante in Richtung der zweiten Kante erstreckt. Der Stift weist ein erstes Ende, das der ersten Kante der Bodenplatte zugeordnet ist und ein zweites, der zweiten Kante der Bodenplatte zugeordnetes Ende auf. Vorzugsweise durchsetzt der Stift die Klemmschiene und die Klemmbacke und ist an dessen erstem Ende über eine Achse mit einem Exzenter verbunden. Als Achse kann beispielsweise ein Bolzen, ein Passstift oder eine ähnliche Verbindung dienen, die eine Drehung des Exzenters, um die Achse ermöglicht. Der Exzenter ist mittels einer zweiten Federung, z.B. einer oder mehrerer Federn oder anderer elastisch rüchstellender Bauteile um die Drehachse elastisch drehbar gelagert. An dessen zweitem Ende steht der Stift mit der Klemmbacke in Wirkverbindung, d.h. in einer Verbindung die eine Kraft- und/oder Momentenübertragung zwischen Stift und Klemmbacke in einer oder mehreren Richtungen ermöglicht. Mittels einer dritten Federung, z. B. einer oder mehrerer Federn oder anderer elastisch rückstellender Bauteile ist ein Riegel in der Bodenplatte elastisch senkbar gelagert. Der Riegel lässt sich entlang einer Achse, die in etwa senkrecht zur Oberfläche der Bodenplatte verläuft, aus der Bodenplatte heraus bewegen bzw. sich in diese hinein senken.

Durch Drehen des Exzenters lässt sich der Stift entlang seiner Längsachse verschieben. Zur Umsetzung der Drehbewegung des Exzenters in eine Längsbewegung des Stifts bildet die Klemmschiene einen Anschlag für den Exzenter. Der Stift und der Riegel entsprechen in ihrer Geometrie einander, wodurch ein gegenseitiger Eingriff, beispielsweise ein verrastendes Eingreifen des Riegels in den Stift oder ein Formschluss zwischen Stift und Riegel möglich ist. Insbesondere kann der Riegel mittig zwischen Klemmbacke und Klemmschiene zumindest teilweise unterhalb des Stifts angeordnet sein, wobei der Riegel und der Stift jeweils eine Anschlagsfläche zur Arretierung des Stifts in Längsrichtung aufweisen. Die Anschlagsflächen können komplementär angeordnet sein, d.h. dass die Anschlagsfläche des Riegels mit der Anschlagsfläche des Stifts in etwa deckungsgleich anordenbar ist.

In einer optionalen Erfindungsausbildung ist die Klemmbacke mittels der Wirkverbindung zwischen Stift und Klemmbacke verschiebbar. D.h., dass aus einer Bewegung des Stifts entlang seiner Längsachse eine gleichgerichtete Bewegung der Klemmbacke und somit eine Vergrößerung oder Verkleinerung des Abstands zwischen Klemmbacke und Klemmschiene resultiert. Die Verbindung zwischen Stift und Klemmbacke kann in nur einer oder in beiden Längsrichtungen wirken, also zur Vergrößerung oder zur Verkleinerung bzw. zur Vergrößerung und zur Verkleinerung des Abstands zwischen Klemmbacke und Klemmschiene.

Die erfindungsgemäße Schnellspannvorrichtung umfasst vorzugsweise eine geöffnete und eine geschlossene Stellung. Die geöffnete Stellung weist einen größeren Abstand zwischen Klemmbacke und Klemmschiene auf und dient dem Einlegen oder Herausnehmen des Gegenstücks. Die geschlossene Stellung weist einen kleineren Abstand zwischen Klemmbacke und Klemmschiene auf und dient dem Einspannen und/oder Einklemmen des Gegenstücks. In einer optionalen Ausführung ragt der Riegel in der geöffneten Stellung derart aus Bodenplatte heraus, dass der Stift durch den Riegel arretiert ist, sich also nicht entlang seiner Längsachse bewegen kann. Vorzugsweise gelingt dies mittels einer Aussparung, die der Stift aufweist sowie einer komplementären Gegenaussparung, die der Riegel aufweist. Die Aussparung und die Gegenaussparung sind in der geöffneten Stellung einander gegenüberliegend angeordnet, sodass diese miteinander in Eingriff stehen bzw. ineinander greifen und der Riegel eine Bewegung des Stifts entlang seiner Längsachse blockiert.

Nach einer vorteilhaften Ausbildung der Erfindung ist der Riegel in der geschlossenen Stellung in die Bodenplatte gesenkt angeordnet. Die Bodenplatte kann hierzu eine Aussparung aufweisen, in welche der Riegel vollständig oder teilweise, jedoch zumindest soweit senkbar ist, dass der Stift und der Riegel nicht miteinander in Eingriff stehen. Weiterhin können die Aussparung des Stifts und die Gegenaussparung des Riegels in der geschlossenen Stellung nicht einander gegenüberliegend und/oder zueinander versetzt angeordnet sein. Dies resultiert aus dem kleineren Abstand zwischen Klemmbacke und Klemmschiene in der geschlossenen Stellung, wodurch der Stift in Richtung der Klemmschiene verschoben ist.

In optionaler erfinderischer Ausgestaltung ist die erste Federung, die der elastisch verschiebbaren Lagerung der Klemmbacke dient in der geöffneten Stellung der Schnellspannvorrichtung entlastet oder größtenteils entlastet und in der geschlossenen Stellung belastet oder größtenteils belastet. Die Begriffe belastet und entlastet sind, auch in der nachfolgenden Beschreibung nicht absolut sondern in Relation zueinander zu verstehen. Zur Federung können beispielsweise eine oder mehrere Druckfedern eingesetzt werden, die durch eine Bewegung der Klemmbacke aus der geöffneten in die geschlossene Stellung belastet bzw. gestaucht werden. Durch Öffnen der Schnellspannvorrichtung, also einer Bewegung der Klemmbacke aus der geschlossenen in die geöffnete Stellung, wird die Druckfeder entlastet.

In einer optionalen Erfindungsausgestaltung ist die zweite Federung zur elastisch drehbaren Lagerung des Exzenters in der geöffneten Stellung belastet oder größtenteils belastet und in der geschlossenen Stellung entlastet oder größtenteils entlastet. Beispielsweise handelt es sich bei der Exzenterfederung um eine oder mehrere Drehfedern oder Schenkelfedern, die durch Drehung des Exzenters aus der geschlossenen in die geöffnete Stellung belastet bzw. gespannt werden.

Optional kann eine dritte Federung zur elastisch senkbaren Lagerung des Riegels in geöffneter Stellung entlastet oder größtenteils entlastet und in geschlossener Stellung belastet oder größtenteils belastet sein. Beispielsweise lässt sich hierzu eine Druckfeder unterhalb des Riegels anbringen, die diesen in eine, aus der Bodenplatte hervorragende Position drückt. Durch Einwirkung einer Kraft auf den Riegel, z.B. durch Einführen eines Gegenstücks in die Schnellspannvorrichtung, kann die Druckfeder belastet bzw. gestaucht werden, wodurch der Riegel in eine abgesenkte Position gelangt.

In vorteilhafter Ausführung ist eine Kraftkomponente der zweiten Feder, die einer Federkraft der ersten Feder entgegenwirkt, größer als die Federkraft der ersten Federung. Aus der exzentrischen Lagerung des Exzenters und der Spannung der Exzenterfeder resultiert eine Kraftkomponente in Längsrichtung des Stifts. Die Federstärke der zweiten Feder kann so gewählt sein, dass die Kraftkomponente größer ist als die Federkraft der ersten Federung und den Exzenter aus der geöffneten Stellung in die geschlossene Stellung dreht.

Gemäß einer vorteilhaften Erfindungsausgestaltung ist die Schnellspannvorrichtung, durch Senken des Riegels in die Bodenplatte, von der geöffneten Stellung in die geschlossene Stellung überführbar. Die Funktionsweise dieser selbstschließenden Schnellspannvorrichtung ist wie folgt: Durch Drehen des Exzenters entgegen der Federkraft der Exzenterfederung lässt sich die Schnellspannvorrichtung in eine vorgespannte, geöffnete Stellung schalten. Die Drehung des Exzenters verursacht eine Verschiebung des Stifts entlang dessen Längsachse in Richtung der Klemmbacke. Die Klemmbackenfederung wird hierdurch entlastet und schiebt die Klemmbacke in eine geöffnete Position, wobei sich der Abstand zwischen Klemmbacke und Klemmschiene vergrößert. Gleichzeitig schiebt die Riegelfederung den Riegel in eine, aus der Bodenplatte hervorragende Position, sodass der Riegel und der Stift ineinander greifen. Der Riegel arretiert den Stift in dessen Längsrichtung und verhindert eine Drehung des vorgespannten Exzenters in dessen geschlossene Position. Die Schnellspannvorrichtung befindet sich in geöffneter, vorgespannter Stellung.

Durch Einlegen eines entsprechenden Gegenstücks, wie z. B. einer Montageschiene in die vorgespannte, geöffnete Schnellspanneinrichtung wird eine Kraft auf den Riegel ausgeübt, die den Riegel in die Bodenplatte senkt. Der Stift ist wieder freigegeben, wodurch die vorgespannte Exzenterfederung den Exzenter in dessen geschlossene Position dreht. Mittels der Wirkverbindung zwischen Stift und Klemmbacke wird die Klemmbacke in Richtung der Klemmschiene bzw. in eine geschlossene Position. Die Exzenterfederung weist eine ausreichende Federkraft auf, um die Klemmbackenfederung, die der Verschiebung der Klemmbacke in die geschlossene Position entgegenwirkt, zu überwinden. Eine manuelle Drehung des Exzenters zum Schalten der Schnellspannvorrichtung in die geschlossene Stellung ist nicht notwendig, da die Schnellspannvorrichtung bei Einlegen eines Gegenstückst selbstständig schließt.

Gemäß einer optionalen Ausbildung der Erfindung ist der Abstand zwischen Klemmschiene und Klemmbacke variabel einstellbar. Hierzu kann der Stift z.B. als Gewindestift ausgebildet sein und an seinem zweiten, die Klemmbacke durchsetzenden Ende mit einer Mutter versehen sein. Durch Drehen der Mutter lässt sich der Abstand zwischen Stift und Klemmbacke präzise variieren. Dies ermöglicht u.a. das Einspannen und/oder Einklemmen von Montageschienen oder anderen Zubehörteilen, die keine normierten Abmessungen aufweisen.

In optionaler Ausführung kann die Schnellspannvorrichtung eine oder mehrere zusätzliche Klemmbacken aufweisen, die sich entlang der zweiten Kante der Bodenplatte erstrecken, wobei die Klemmbacken jeweils mit einer ersten Federung elastisch verschiebbar gelagert sind. Einer oder mehrere zusätzliche Stifte erstrecken sich von der ersten Kante in Richtung der zweiten Kante und sind an ihren ersten Enden, die der ersten Kante zugeordnet sind jeweils mit einem Exzenter über eine Achse verbunden. An ihren zweiten Enden, die der zweiten Kante zugeordnet sind stehen die Stifte mit den Klemmbacken in Wirkverbindung. Die Exzenter sind jeweils mittels einer zweiten Federung um die Achse elastisch drehbar gelagert. Einer oder mehrere zusätzliche Riegel sind jeweils mittels einer dritten Federung in der Bodenplatte elastisch senkbar gelagert. Einerseits lässt sich durch die Verwendung mehrerer Klemmbacken bzw. Exzenter die Klemmkraft der Schnellspannvorrichtung erhöhen, andererseits können verschiedene Zubehörteile variabel in die separaten Abstände zwischen Klemmbacken und Klemmschiene eingespannt und/oder eingeklemmt werden.

Optional können die Klemmbacken gemeinsam mit der gegenüberliegenden Klemmschiene eine Führung zur Aufnahme einer Montageschiene bilden. Beispielsweise können Abstand und Geometrie der Klemmbacken einer NATO-, Picatinny- oder einer sonstigen Waffenmontageschiene angepasst sein. In weiterer optionaler Ausführung kann die Geometrie des Stifts und des Riegels zur Aufnahme einer Montageschiene, insbesondere einer NATO-, Picatinny- oder sonstigen Waffenmontageschiene ausgebildet sein. Beispielsweise kann ein Durchmesser des Stifts geringer als die Breite einer Quernut einer solchen Waffenmontageschiene sein.

Weitere Einzelheiten, Merkmale, Merkmals(unter)kombinationen, Vorteile und Wirkungen ergeben sich aus der nachfolgenden Beschreibung einer beispielhaften Ausführungsform der Erfindung mit zugehöriger Zeichnung. Hierin zeigen:
Fig.1 eine perspektivische Darstellung einer selbstschließenden Schnellspannvorrichtung in geöffneter, vorgespannter Stellung,
Fig.2 eine seitliche Ansicht der selbstschließende Schnellspannvorrichtung in geöffneter, vorgespannter Stellung
Fig.3 eine Draufsicht der selbstschließende Schnellspannvorrichtung in geöffneter, vorgespannter Stellung,
Fig.4 einen Schnitt der selbstschließenden Schnellspannvorrichtung in geöffneter, vorgespannter Stellung, entlang der Linie C-C aus Fig. 2,
Fig.5 einen Schnitt der selbstschließenden Schnellspannvorrichtung in geöffneter, vorgespannter Stellung, entlang der Linie B-B aus Fig. 2,
Fig.6 einen Schnitt der selbstschließenden Schnellspannvorrichtung in geöffneter, vorgespannter Stellung, entlang der Linie A-A aus Fig. 2,
Fig.7 eine Draufsicht der selbstschließende Schnellspannvorrichtung in geschlossener Stellung,
Fig.8 einen Schnitt der selbstschließenden Schnellspannvorrichtung in geschlossener Stellung, entlang der Linie C-C aus Fig. 7,
Fig.9 einen Schnitt der selbstschließenden Schnellspannvorrichtung in geschlossener Stellung, entlang der Linie B-B aus Fig. 7,
Fig.10 einen Schnitt der selbstschließenden Schnellspannvorrichtung in geschlossener Stellung, entlang der Linie A-AC aus Fig. 7.

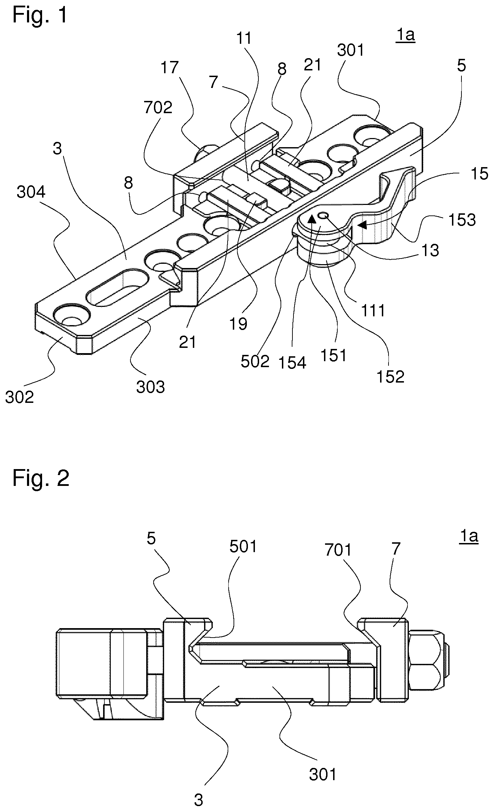

In Figur 1 ist eine beispielhafte Ausführung einer selbstschließenden Schnellspannvorrichtung in vorgespannter, geöffneter Stellung 1a perspektivisch dargestellt. Die Schnellspannvorrichtung umfasst eine im Wesentlichen quaderförmige Bodenplatte 3 mit zwei zueinander parallelen Querkanten 301, 302 sowie einer längsgerichteten ersten Kante 303 und einer längsgerichteten zweiten Kante 304. Ausgehend von der Querkante 301 verläuft eine Klemmschiene 5 entlang der ersten Kante 303. Die Bodenplatte 3 und die Klemmschiene 5 sind einstückig gefertigt. Einem Abschnitt der Klemmschiene 5 gegenüberliegend angeordnet verläuft eine Klemmbacke 7 entlang der zweiten Kante 304. Die Klemmbacke 7 ist mit zwei Gleitstiften 8 fest verbunden. Die Gleitstifte 8 sind parallel zu den Querkanten 301, 302 angeordnet und innerhalb der Bodenplatte 3 beweglich gelagert. In der geöffneten Stellung 1a der Schnellspannvorrichtung ragt ein Teil der Gleitstifte 8 aus der Bodenplatte 3 heraus und bildet einen Abstand zwischen Bodenplatte 3 und Klemmbacke 7. Aus Figur 2 ist eine seitliche Darstellung der Schnellspannvorrichtung, in vorgespannter, geöffneter Stellung 1, auf die Querkante 301 zu entnehmen. Die Bodenplatte 3, die Klemmschiene 5 und die Klemmbacke 7 bilden gemeinsam eine in etwa U-förmige Anordnung, wobei die Klemmschien 5 und die Klemmbacke 7 jeweils eine Nut 501 bzw. 701 aufweisen. Die Nuten 501 und 701 bilden gemeinsam eine Führung zum Einspannen und/oder Einklemmen einer Prismenschiene.

Der Figur 1 ist zu entnehmen, dass die Klemmschiene 5 und die Klemmbacke 7 jeweils eine Öffnung 502 bzw. 702 aufweisen, die einander gegenüberliegend angeordnet sind. Ein in etwa zylindrischer Stift 11 durchsetzt beide Öffnungen 501 sowie 701 und verläuft parallel zu den Querkanten 301 sowie 302. Der Stift 11 ist teilweise in die Bodenplatte 3 gesenkt und entlang seiner Längsachse beweglich gelagert. Ein erstes Ende 111 des Stifts 11 ragt aus der Öffnung 501 der Klemmschiene 5 und weist eine Öffnung 112 auf. Durch die Öffnung 112 verläuft eine Achse 13, z. B. eine Exzenterschraube, die den Stift 11 mit einem Exzenter 15 verbindet. Das erste Ende 111 des Stifts 11 ist breiter ausgebildet und sandwichartig zwischen einer oberen Exzenterscheibe 151 und einer unteren Exzenterscheibe 152 des Exzenters 15 angeordnet. In der geöffneten Stellung der Schnellspannvorrichtung 1 ist ein Spannhebel 153 zur Querkante 301 gerichtet, wodurch der kurze Radius 154 des Exzenters 15 einen Anschlag mit einer äußeren Fläche der Klemmschiene 5 bildet. Eine Drehfeder oder auch Schenkelfeder (nicht dargestellt) befindet sich in einer Anordnung um die Achse 13, wobei ein erster Schenkel an dem Spannhebel 153 anliegt und ein zweiter Schenkel an dem Stift 11. Die Drehfeder wird durch Auslenken des Spannhebels 153 in Richtung der Querkante 301 gespannt. Der Stift 11 umfasst ein zweites Ende 113, das aus der Öffnung 701 der Klemmbacke 7 ragt. Eine Mutter 17 ist mittels eines Gewindes 114 auf das zweite Ende 113 aufgeschraubt und bildet einen Anschlag mit einer äußeren Fläche der Klemmbacke 7.

Ein in etwa quaderförmiger Riegel 19 mit abgerundeten Stirnseiten ist mittig zwischen der ersten Kante 303 sowie der zweiten Kante 304 der Bodenplatte 3 angeordnet und verläuft parallel zu diesen. Der Riegel 19 ist teilweise in eine Aufnahmeöffnung 306 der Bodenplatte 3 gesenkt und ragt zum anderen Teil aus der Bodenplatte 3 hervor. Weiterhin weist der Riegel 19 eine Gegenaussparung 191 auf, die in der geöffneten Stellung 1 der Schnellspannvorrichtung zur Aufnahme des Stifts dient, sodass dieser zwischen den abgerundeten Stirnseiten des Riegels 19 verläuft. Benachbart zu den abgerundeten Stirnseiten des Riegels 1 befindet sich jeweils ein Querbalken 21, parallel zum Stift 11 angeordnet. Die Abstände zwischen dem Stift und den Querbalken 21 sowie die Höhe der Querbalken 21 als auch der Durchmesser des Stifts 11 sind so gewählt, dass die Quernuten gängiger Waffenmontageschienen passgenau in die Abstände eingefügt werden können. Die Querbalken 21 erfüllen somit die Funktion einer zusätzlichen Sicherung gegen Verrutschen der Waffenmontageschiene in Längsrichtung.

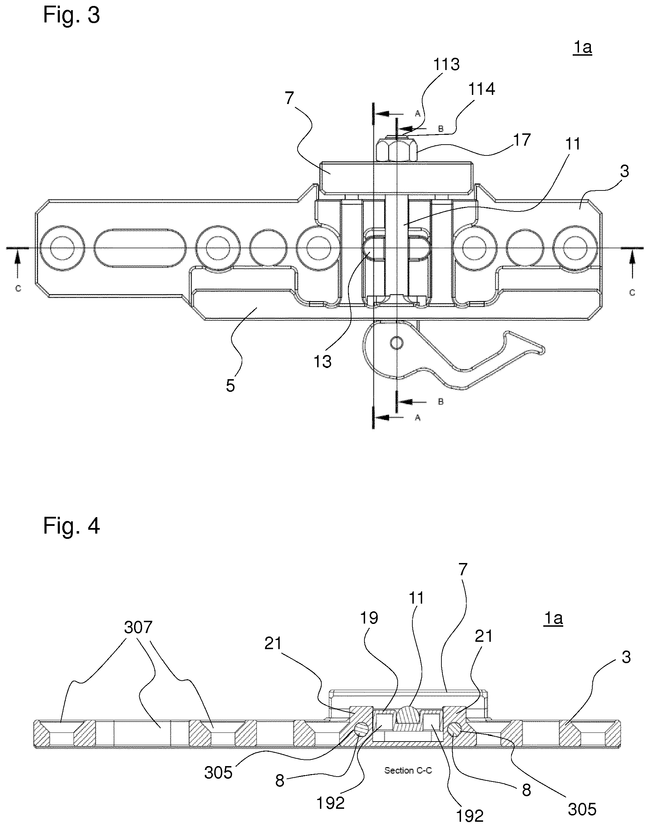

In Figur 3 ist eine Draufsicht der selbstschließenden Schnellspannvorrichtung in vorgespannter, geöffneter Stellung 1a zu erkennen. Am zweiten Ende 113 des Stifts 11, der die Klemmbacke 7 durchsetzt befinden sich ein Gewinde 114 und eine Mutter 17. Der Abstand zwischen Klemmbacke 7 und Bodenplatte 3 lässt sich mittels einer Drehbewegung der Mutter 17 präzise vergrößern oder verkleinern. Weiterhin zeigt Figur 3 drei Schnittlinien A-A, entlang einer Querachse der Schnellspannvorrichtung, B-B, entlang der Längsachse des Stifts 11 und C-C, entlang einer mittleren Längsachse der Schnellspannvorrichtung.

Die Darstellung eines Schnitts der Schnellspannvorrichtung, entlang der Schnittlinie C-C kann aus Figur 4 entnommen werden. Die Gleitstifte 8 sind innerhalb zweier Öffnungen 305, die unterhalb der Querbalken 21 in die Bodenplatte 3 gefügt sind, beweglich gelagert. Eine Druckfeder (nicht dargestellt) ist jeweils in den Öffnungen 305 der Bodenplatte 3 zwischen den Gleitstiften 8 und der Klemmschiene 5 angeordnet. Die Federkraft der Druckfedern wirkt auf den jeweiligen Gleitstift 8, in Richtung der Klemmbacke 7. Der Riegel 19 ist innerhalb einer Aufnahmeöffnung 306 der Bodenplatte 3 angeordnet und weist zwei untere Öffnungen 192 auf. Die unteren Öffnungen 192 sind jeweils unterhalb einer abgerundeten Längsseite des Riegels 19 bzw. zu beiden Seiten des Stifts 11 angeordnet. Innerhalb der unteren Öffnungen 192 befindet sich je eine Druckfeder (nicht dargestellt), deren Federkraft den Riegel aus der Aufnahmeöffnung 306 und gegen den Stift 11 drückt. Die Bodenplatte 3 durchsetzend können Montageöffnungen in Form von Nuten, Senklochbohrungen oder Zylinderbohrungen angeordnet sein.

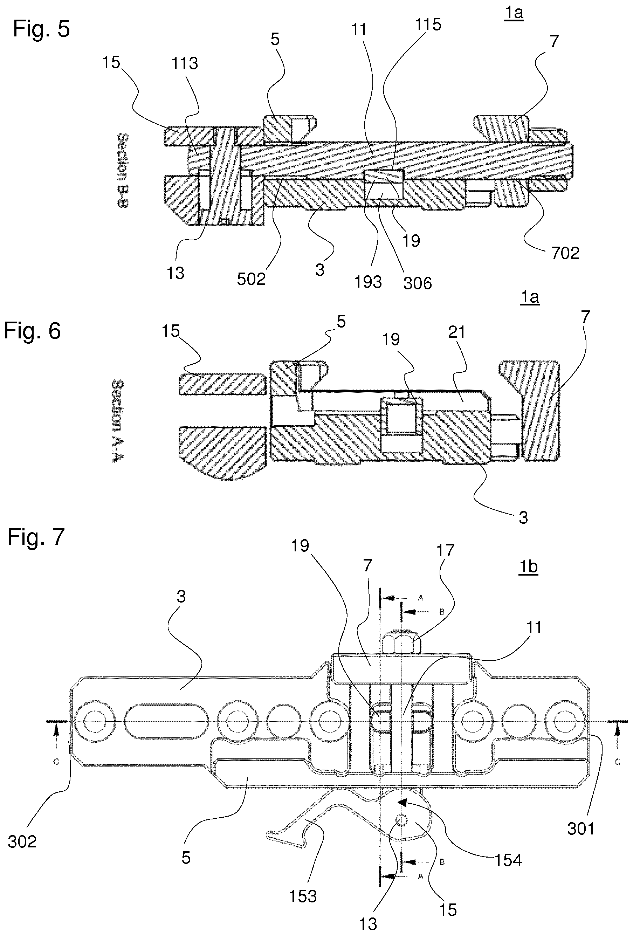

In Figur 5 ist ein Schnitt der Schnellspannvorrichtung entlang der Schnittlinie B-B aus Figur 3 dargestellt. Der Schnitt verläuft durch die Längsachse des Stifts 11, der die Öffnung 702 der Klemmbacke 7 sowie die Öffnung 502 der Klemmschiene 5 durchsetzt. Der Stift weist eine Aussparung 115 auf, die in der geöffneten Stellung 1a der Schnellspannvorrichtung dem Riegel 19 gegenüber liegt. Ein Bodenabschnitt 193 des Riegels 19, der unterhalb der Gegenaussparung 191 angeordnet ist, befindet sich passgenau innerhalb der Aussparung 115 des Stifts 11, wodurch der Stift 11 arretiert ist. Die Achse 13, die hier als Exzenterschraube dargestellt ist, verbindet das zweite Ende 113 des Stifts 11, mit dem Exzenter 15.

Figur 6 stellt einen Querschnitt der Schnellspannvorrichtung durch eine abgerundete Längsseite des Riegels 19 dar. Der Riegel 19 ragt aus der Bodenplatte 3 hervor und endet unterhalb einer Oberkante eines Querbalkens 21.

Figur 7 zeigt eine Draufsicht der selbstschließenden Schnellspannvorrichtung in geschlossener Stellung 1b. Der Riegel 19 befindet sich in abgesenkter Position innerhalb der Bodenplatte 3. Ein Absenken des Riegels 19 lässt sich durch eine äußere Krafteinwirkung, z.B. das Einlegen einer Montageschiene bewirken. Der Spannhebel 153 ist zur Querkante 302 gerichtet, wodurch der lange Radius 154 des Exzenters 15 einen Anschlag mit einer äußeren Fläche der Klemmschiene 5 bildet. Hierdurch bewegt sich der Stift 11 in eine, in Richtung der Klemmschiene 5 versetzte Position. Die Mutter 17 ist mit dem zweiten Ende 113 des Stifts 11 verschraubt und übt, über einen Anschlag zwischen Mutter 17 und einer äußeren Fläche der Klemmbacke 7, eine Kraft auf die Klemmbacke 7 aus, wodurch diese in eine geschlossene Stellung 1b gedrückt ist. Die Federkraft, der um die Achse angebrachten Drehfeder (nicht dargestellt), zusammen mit der Reibungskraft, die zwischen den Exzenterscheiben 151,152 und der äußeren Fläche der Klemmschiene 5 auftritt, wirkt der Federkraft der Druckfedern (nicht dargestellt), die zwischen Klemmschiene 5 und Gleitstiften 8 angeordnet sind, entgegen. Die Drehfederkraft und die Reibungskraft sind hierbei größer als die Kräfte der Druckfedern, sodass die Gleitstifte 8 in Richtung der Klemmschiene 5 verschoben sind und die Klemmbacke 7 an der Bodenplatte 3 anliegt.

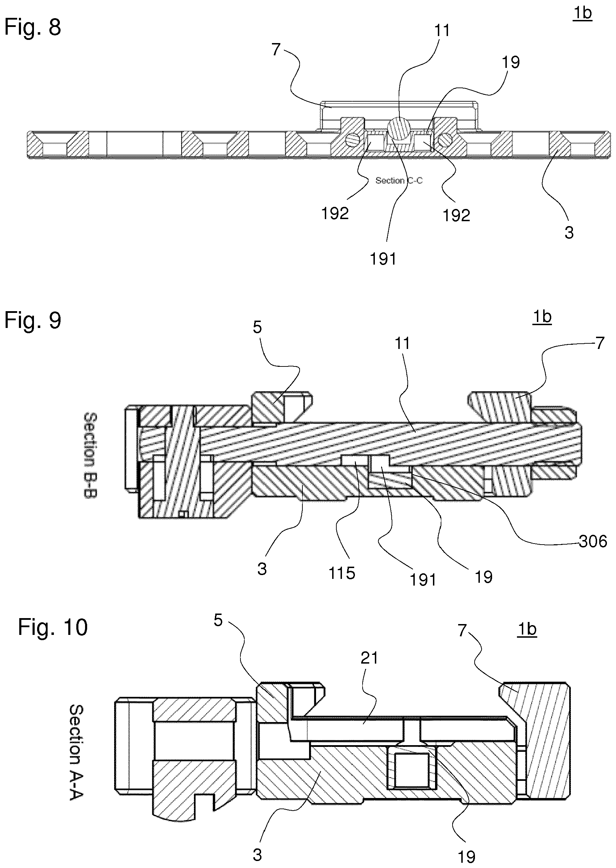

Figur 8 zeigt die Schnellspannvorrichtung in geschlossener Stellung 1b entlang der Schnittlinie C-C aus Figur 7. Der Riegel 19 befindet sich in abgesenkter Position und bildet eine gemeinsame Oberfläche mit der Bodenplatte 3. Die Druckfedern (nicht dargestellt), die sich innerhalb der unteren Öffnungen 192 befinden, sind gestaucht. Aufgrund der abgesenkten Position des Riegels 19 bildet die Gegenaussparung 191 keinen arretierenden Eingriff mit der Aussparung 115 des Stifts 11, wodurch der Stift 11 entlang seiner Längsachse beweglich ist.

Ein Öffnen der geschlossenen Schnellspannvorrichtung ist durch manuelles Umlegen des Spannhebels 153 in Richtung der Querkante 301 möglich, die Aussparung 115 des Stifts 11 gerät hierbei in eine Position gegenüber der Gegenaussparung 191 des Riegels 19, wodurch dieser mittels der Druckfedern (nicht dargestellt) innerhalb der unteren Öffnungen 192 aus der Bodenplatte 3 gedrückt wird und den Stift 11 arretiert. Die Druckfedern innerhalb der Öffnungen 305 der Bodenplatte 3 drücken dann die Klemmbacke 7 in eine geöffnete Stellung 1a.

Figur 9 zeigt einen Schnitt der Schnellspannvorrichtung in geschlossener Stellung 1b entlang der Schneidlinie B-B aus Figur 7. Zu erkennen ist, dass der Stift 11 in Richtung der Klemmschiene 5 verschoben ist, wodurch der Abstand zwischen Klemmschiene 5 und Klemmbacke 7 verringert ist. Weiterhin befinden sich die Aussparung 115 des Stifts 11 und die Gegenaussparung 191 bzw. der Riegel 19 selbst in einer zueinander versetzten Position, wodurch der Riegel 19 innerhalb der Aufnahmeöffnung 306 der Bodenplatte 3 fixiert ist.

In Figur 10 ist ein Schnitt der Schnellspannvorrichtung in geschlossener Stellung 1b entlang der Linie A-A aus Figur 7 dargestellt. Der Riegel 19 und die Bodenplatte 3 bilden eine gemeinsame Oberfläche zur Auflage einer Montageschiene insbesondere einer Prismenschiene. Der Querbalken 21 ragt in eine etwaige Quernut einer solchen Montageschiene hinein und bildet eine Sicherung gegen ein Verrutschen in Längsrichtung. Die Nuten 501 und 701 bilden eine prismenförmige Führung, in der eine eingelegte Prismenschiene in den übrigen Achsrichtungen gegen Verrutschen gesichert ist.

### Bezugszeichenliste

- 1a: geöffnete Stellung
- 1b: geschlossene Stellung
- 3: Bodenplatte
- 301, 302: Querkanten
- 303: längsgerichtete erste Kante
- 304: längsgerichtete zweite Kante
- 305: Öffnung
- 306: Aufnahmeöffnung
- 307: Montageöffnung
- 5: Klemmschiene
- 501: Nut
- 502: Öffnung
- 7: Klemmbacke
- 701: Nut
- 702: Öffnung
- 8: Gleitstift
- 11: Stift
- 111: erstes Ende
- 112: Öffnung
- 113: zweites Ende
- 114: Gewinde
- 115: Aussparung
- 13: Achse
- 15: Exzenter
- 151: obere Exzenterscheibe
- 152: untere Exzenterscheibe
- 153: Spannhebel
- 154: kurzer Radius
- 155: langer Radius
- 17: Mutter
- 19: Riegel
- 191: Gegenaussparung
- 192: untere Öffnung
- 193: Bodenabschnitt
- 21: Querbalken

## Patentansprüche

1. Schnellspannvorrichtung zur selbstschließenden Aufnahme eines Gegenstücks, insbesondere einer Waffenmontageschiene oder eines optischen Geräts, umfassend:
- eine Bodenplatte (3),
- eine Klemmschiene (5), die sich entlang einer ersten Kante (303) der Bodenplatte (3) erstreckt,
- eine Klemmbacke (7), die sich entlang einer zweiten, der ersten Kante (303) gegenüberliegend angeordneten Kante (304) der Bodenplatte (3) erstreckt, wobei die Klemmbacke (7) mit einer ersten Federung elastisch verschiebbar gelagert ist,
- einen Stift (11), der sich von der ersten Kante (303) in Richtung der zweiten Kante (304) erstreckt, wobei der Stift (11) an einem ersten Ende (111), das der ersten Kante (303) zugeordnet ist, mit einem Exzenter (15) über eine Achse (13) verbunden ist und an einem zweiten Ende (113), das der zweiten Kante (304) zugeordnet ist mit der Klemmbacke (7) in Wirkverbindung steht,
- einen Riegel (19), der mittels einer dritten Federung in der Bodenplatte (3) elastisch senkbar gelagert ist, wobei der Stift (11) entlang seiner Längsachse durch Drehen des Exzenters (15) verschiebbar ist, **dadurch gekennzeichnet, dass** der Exzenter (15) mittels einer zweiten Federung um die Achse (13) elastisch drehbar gelagert ist, und der Stift (11) und der Riegel (19) mit einander entsprechender Geometrie zum gegenseitigen Eingriff gestaltet sind.

2. Schnellspannvorrichtung nach Anspruch 1, **dadurch gekennzeichnet, dass** die Klemmbacke (7) mittels der Wirkverbindung zwischen Stift (11) und Klemmbacke (7) verschiebbar ist.

3. Schnellspannvorrichtung nach Anspruch 2, mit einer geöffneten (1a) und einer geschlossenen Stellung (1b), **dadurch gekennzeichnet, dass** der Riegel (19) in der geöffneten Stellung (1a) derart aus der Bodenplatte (3) herausragt, dass der Stift (11) durch den Riegel (19) arretiert ist.

4. Schnellspannvorrichtung nach Anspruch 3, **dadurch gekennzeichnet, dass** der Stift (11) eine Aussparung (115) aufweist und der Riegel (19) eine Gegenaussparung (191), die in der geöffneten Stellung (1a) einander gegenüber liegen und miteinander in Eingriff stehen.

5. Schnellspannvorrichtung nach einem der Ansprüche 3 oder 4 **dadurch gekennzeichnet, dass** der Riegel (19) in der geschlossenen Stellung (1b) derart in die Bodenplatte (3) gesenkt ist, dass der Stift (11) entlang seiner Längsrichtung verschiebbar ist.

6. Schnellspannvorrichtung nach Anspruch 5 **dadurch gekennzeichnet, dass** die Aussparung (115) des Stifts (11) und die Gegenaussparung (191) des Riegels (19) in der geschlossenen Stellung (1b) nicht einander gegenüberliegend angeordnet sind.

7. Schnellspannvorrichtung nach einem der vorhergehenden Ansprüche 3 - 6, **dadurch gekennzeichnet, dass** die erste Federung zur elastisch verschiebbaren Lagerung der Klemmbacke (7) in geöffneter Stellung (1a) entlastet und in geschlossener Stellung (1b) belastet ist.

8. Schnellspannvorrichtung nach einem der vorhergehenden Ansprüche 3 - 7, **dadurch gekennzeichnet, dass** die zweite Federung zur elastisch drehbaren Lagerung des Exzenters (15) in geöffneter Stellung (1a) belastet und in geschlossener Stellung (1b) entlastet ist.

9. Schnellspannvorrichtung nach einem der vorhergehenden Ansprüche 3 - 8, **dadurch gekennzeichnet, dass** die dritte Federung zur elastisch senkbaren Lagerung des Riegels (19) in geöffneter Stellung (1a) entlastet und in geschlossener Stellung belastet (1b) ist.

10. Schnellspannvorrichtung nach einem der vorhergehenden Ansprüche, **dadurch gekennzeichnet, dass** eine Kraftkomponente der zweiten Federung, die einer Federkraft der ersten Feder entgegenwirkt, größer ist als die Federkraft der ersten Federung.

11. Schnellspannvorrichtung nach Ansprüchen 5-10, **dadurch gekennzeichnet, dass** die Schnellspannvorrichtung durch Senken des Riegels (19) in die Bodenplatte (3), von der geöffneten (1a) in die geschlossene Stellung (1b) überführbar ist.

12. Schnellspannvorrichtung nach einem der vorhergehenden Ansprüche, **dadurch gekennzeichnet, dass** ein Abstand zwischen Klemmschiene (5) und Klemmbacke (7) variabel einstellbar ist.

13. Schnellspannvorrichtung nach einem der vorhergehenden Ansprüche, **gekennzeichnet durch**
- eine oder mehrere zusätzliche Klemmbacken (7), die sich entlang der zweiten Kante (304) der Bodenplatte (3) erstrecken, wobei die Klemmbacken (7) mit ersten Federungen elastisch verschiebbar gelagert sind,
- einen oder mehrere zusätzliche Stifte (11), die sich von der ersten Kante (303) in Richtung der zweiten Kante (304) erstrecken, wobei die Stifte (11) an ihren ersten Enden (111), die der ersten Kante (303) zugeordnet sind mit Exzentern (15) über eine Achse (13) verbunden sind und an ihren zweiten Enden (113), die der zweiten Kante (304) zugeordnet sind mit den Klemmbacken (7) in Wirkverbindung stehen,
- wobei die Exzenter (15) mittels zweiter Federungen um die Achse (13) elastisch drehbar gelagert sind,
- einen oder mehrere zusätzliche Riegel (19), die mittels dritter Federungen in der Bodenplatte (3) elastisch senkbar gelagert sind,

14. Schnellspannvorrichtung nach einem der vorhergehenden Ansprüche, **dadurch gekennzeichnet, dass** die Klemmbacken (7) gemeinsam mit der Klemmschiene (5) eine Führung zur Aufnahme einer Montageschiene, insbesondere einer Prismenschiene bilden.

15. Schnellspannvorrichtung nach einem der vorhergehenden Ansprüche, **dadurch gekennzeichnet, dass** die Geometrie des Stifts (11) und des Riegels (19) zur Aufnahme einer Montageschiene ausgebildet ist.

## Claims

1. A quick-acting clamping device for self-closing holding of a counter-piece, in particular a weapon mounting rail or an optical device, comprising:
- a base plate (3),
- a clamping rail (5) that extends along a first edge (303) of the base plate (3),
- a clamping jaw (7) that extends along a second edge (304) of the base plate (3) located opposite the first edge (303), the clamping jaw (7) being mounted such as to be elastically displaceable with a first suspension,
- a pin (11) that extends from the first edge (303) towards the second edge (304), the pin (11) being connected by an axis (13) to an eccentric (15) at a first end (111) that is assigned to the first edge (303), and being operatively connected to the clamping jaw (7) at a second end (113) that is assigned to the second edge (304),
- a latch (19) that is mounted such as to be able to be elastically lowered by means of a third suspension in the base plate (3), the pin (11) being able to be displaced along its longitudinal axis by turning the eccentric (15), **characterised in that** the eccentric (15) is mounted such that it can be turned elastically about the axis (13) by means of a second suspension, and the pin (11) and the latch (19), with corresponding geometries, are designed for mutual engagement.

2. The quick-acting clamping device according to Claim 1, **characterised in that** the clamping jaw (7) can be displaced between the pin (11) and the clamping jaw (7) by means of the operative connection.

3. The quick-acting clamping device according to Claim 2, with an open (1a) and a closed position (1b), **characterised in that** in the open position (1a) the latch (19) protrudes from the base plate (3) such that the pin (11) is locked by the latch (19).

4. The quick-acting clamping device according to Claim 3, **characterised in that** the pin (11) has a recess (115) and the latch (19) has a mating recess (191) which are opposite one another and engage with one another in the open position (1a).

5. The quick-acting clamping device according to either of Claims 3 or 4, **characterised in that** in the closed position (1b) the latch (19) is lowered into the base plate (3) such that the pin (11) can be displaced along its longitudinal direction.

6. The quick-acting clamping device according to Claim 5, **characterised in that** the recess (115) of the pin (11) and the mating recess (191) of the latch (19) are not located opposite one another in the closed position (1b).

7. The quick-acting clamping device according to any of the preceding Claims 3 - 6, **characterised in that** the first suspension for the elastically displaceable mounting of the clamping jaw (7) is relieved in the open position (1a) and is charged in the closed position (1b).

8. The quick-acting clamping device according to any of the preceding Claims 3 - 7, **characterised in that** the second suspension for the elastically rotatable mounting of the eccentric (15) is loaded in the open position (1a) and is relieved in the closed position (1b).

9. The quick-acting clamping device according to any of the preceding Claims 3 - 8, **characterised in that** the third suspension for the elastically lowerable mounting of the latch (19) is relieved in the open position (1a) and is loaded in the closed position (1b).

10. The quick-acting clamping device according to any of the preceding claims, **characterised in that** a force component of the second suspension which counteracts a spring force of the first spring is greater than the spring force of the first suspension.

11. The quick-acting clamping device according to Claims 5 - 10, **characterised in that** by lowering the latch (19) into the base pate (3), the quick-acting clamping device can be transferred from the open (1a) into the closed position (1b).

12. The quick-acting clamping device according to any of the preceding claims, **characterised in that** a distance between the clamping rail (5) and the clamping jaw (7) is variably adjustable.

13. The quick-acting clamping device according to any of the preceding claims, **characterised by**
- one or more additional clamping jaws (7) that extend along the second edge (304) of the base plate (3), the clamping jaws (7) being elastically displaceably mounted with first suspensions,
- one or more additional pins (11) that extend from the first edge (303) towards the second edge (304), the pins (11) being connected via an axis (13) to eccentrics (15) at their first ends (111) which are assigned to the first edge (303), and are operatively connected to the clamping jaws (7) at their second ends (113) which are assigned to the second edge (304),
- the eccentrics (15) being elastically rotatably mounted about the axis (13) by means of second suspensions,
- one or more additional latches (19) which are mounted such that they can be lowered elastically by means of third suspensions in the base plate (3).

14. The quick-acting clamping device according to any of the preceding claims, **characterised in that** the clamping jaws (7) together with the clamping rail (5) form a guide for holding a mounting rail, in particular a prism rail.

15. The quick-acting clamping device according to any of the preceding claims, **characterised in that** the geometry of the pin (11) and of the latch (19) is designed for holding a mounting rail.

## Revendications

1. Dispositif de serrage rapide pour le logement à fermeture automatique d'une pièce complémentaire, en particulier d'un rail de montage d'arme ou d'un dispositif optique, comprenant :
- une plaque de fond (3),
- un rail de serrage (5) qui s'étend le long d'un premier bord (303) de la plaque de fond (3),
- une mâchoire de serrage (7) qui s'étend le long d'un second bord (304) opposé au premier bord (303) de la plaque de fond (3), laquelle mâchoire de serrage (7) est montée déplaçable élastiquement au moyen d'un premier moyen élastique,
- une broche (11) s'étendant à partir du premier bord (303) en direction du second bord (304), laquelle broche (11) est associée au premier bord (303) selon une première extrémité (111) par un excentrique (15) lié autour d'un axe (13), et est associée au second bord (304) selon une seconde extrémité (113) par la mâchoire de serrage (7) en liaison fonctionnelle,
- un verrou (19) qui est monté de façon élastiquement abaissable dans la plaque de fond (3) au moyen d'un troisième moyen élastique,
- dans lequel la broche (11) est déplaçable le long de son axe longitudinal par la rotation de l'excentrique (15)
**caractérisé en ce que**
l'excentrique (15) est monté élastiquement rotatif autour de l'axe (13) au moyen d'un second moyen élastique, et la broche (11) et le verrou (19) ont des géométries correspondantes pour un engagement mutuel.

2. Dispositif de serrage rapide selon la revendication 1, **caractérisé en ce que** la mâchoire de serrage (7) est déplaçable au moyen de la liaison fonctionnelle entre la broche (11) et la mâchoire de serrage (7).

3. Dispositif de serrage rapide selon la revendication 2, avec une position ouverte (1a) et une position fermée (1b), **caractérisé en ce que** le verrou (19) dans la position ouverte (1a) fait saillie de la plaque de fond (3) de telle manière que la broche (11) est bloquée par le verrou (19).

4. Dispositif de serrage rapide selon la revendication 3, **caractérisé en ce que** la broche (11) présente un évidement (115) et le verrou (19) comporte un évidement correspondant (191), lesquels se font face et viennent en prise l'un avec l'autre en position d'ouverture (1a).

5. Dispositif de serrage rapide selon l'une quelconque des revendications 3 ou 4, **caractérisé en ce que** le verrou (19), dans la position de fermeture (1b), est abaissé dans la plaque de fond (3) de telle sorte que la broche (11) est mobile le long de sa direction longitudinale.

6. Dispositif de serrage rapide selon la revendication 5, **caractérisé en ce que** l'évidement (115) de la broche (11) et l'évidement correspondant (191) du verrou (19) ne sont pas disposés en face l'un de l'autre dans la position fermée (1b).

7. Dispositif de serrage rapide selon l'une quelconque des revendications précédentes 3 - 6, **caractérisé en ce que** le premier moyen élastique pour le montage à déplacement élastique de la mâchoire de serrage (7) est détendu dans la position d'ouverture (1a) et est tendu dans la position de fermeture (1b).

8. Dispositif de serrage rapide selon l'une quelconque des revendications précédentes 3 - 7, **caractérisé en ce que** le second moyen élastique pour le montage en rotation de manière élastique de l'excentrique (15) est tendu dans la position d'ouverture (1a) et est détendu dans la position de fermeture (1b).

9. Dispositif de serrage rapide selon l'une quelconque des revendications précédentes 3 - 8, **caractérisé en ce que** le troisième moyen élastique pour le maintien en abaissement élastique du verrou (19) est détendu dans la position d'ouverture (1a) et est tendu dans la position de fermeture (1b).

10. Dispositif de serrage rapide selon l'une quelconque des revendications précédentes, **caractérisé en ce qu'**une composante de force du second moyen élastique, qui contrecarre une force élastique du premier moyen élastique, est supérieure à la force élastique du premier moyen élastique.

11. Dispositif de serrage rapide selon les revendications 5 - 10, **caractérisé en ce que** le dispositif de serrage rapide est amené de la position d'ouverture (1a) jusqu'à la position de fermeture (1b) par l'abaissement du verrou (19) dans la plaque de fond (3).

12. Dispositif de serrage rapide selon l'une quelconque des revendications précédentes, **caractérisé en ce qu'**une distance entre le rail de serrage (5) et la mâchoire de serrage (7) peut être fixée de façon variable.

13. Dispositif de serrage rapide selon l'une quelconque des revendications précédentes, **caractérisé par** :
- une ou plusieurs mâchoires de serrage (7) supplémentaires, s'étendant le long du second bord (304) de la plaque de fond (3), dans lequel les mâchoires de serrage (7) sont déplaçables élastiquement au moyen de premiers moyens élastiques,
- une ou plusieurs broches (11) supplémentaires, s'étendant chacune depuis le premier bord (303) en direction du second bord (304), dans lequel les broches (11) sont associées au premier bord (303) selon leurs premières extrémités (111) par des excentriques (15) liés autour d'un axe (13), et sont associées au second bord (304) selon leurs secondes extrémités (113) par les mâchoires de serrage (7) en liaison fonctionnelle,
- dans lequel les excentriques (15) sont montés élastiquement rotatifs autour de l'axe (13) au moyen de seconds moyens élastiques,
- un ou plusieurs verrous (19) supplémentaires, montés de façon élastiquement abaissable dans la plaque de fond (3) au moyen de troisièmes moyens élastiques.

14. Dispositif de serrage rapide selon l'une quelconque des revendications précédentes, **caractérisé en ce que** les mâchoires de serrage (7) conjointement avec le rail de serrage (5) constituent un guide destiné à recevoir un rail de montage, en particulier en queue d'aronde.

15. Dispositif de serrage rapide selon l'une quelconque des revendications précédentes, **caractérisé en ce que** la géométrie de la broche (11) et du verrou (19) est conformée pour recevoir un rail de montage.
